# EUROPÄISCHE PATENTSCHRIFT

(11) **EP 2 489 459 B1**
(45) Veröffentlichungstag und Bekanntmachung des Hinweises auf die Patenterteilung: **11.10.2023**
(21) Anmeldenummer: 11195878.1
(22) Anmeldetag: 28.12.2011
(51) Int. Cl.: B23K 26/32, B23K 26/067, B23K 26/06

(54) **Verfahren zum Verschweißen von Bauteilen mittels eines Laserstrahls**
Method for welding components by means of a laser beam
Procédé de soudage de composants à l'aide d'un rayon laser

(30) Priorität: 15.02.2011 DE 102011004116
(43) Veröffentlichungstag der Anmeldung: 22.08.2012
(73) Patentinhaber: Robert Bosch GmbH, 70442 Stuttgart (DE)
(72) Erfinder: Engler, Sebastian, 70771 Leinfelden-Echterdingen (DE); Ramsayer, Reiner, 71701 Schwieberdingen (DE)

(56) Entgegenhaltungen:
- WO-A1-03/031108
- WO-A2-2008/046542
- DE-A1- 10 261 422
- DE-A1-102004 050 819
- DE-B4- 10 261 422
- FR-A1- 2 798 084
- JP-A- H01 228 689

## Beschreibung

### Stand der Technik

Die Erfindung betrifft ein Verfahren zum Verschweißen von Bauteilen mittels eines Laserstrahls nach dem Oberbegriff des Anspruchs 1.

Ein derartiges Verfahren ist aus der WO 2008/046542 A2 bekannt. Bei dem bekannten Verfahren werden außerhalb der Schmelzzone durch eine elektromagnetische Einrichtung zwei Temperaturfelder erzeugt, die synchron mit dem Laserstrahl in Vorschubrichtung mitbewegt werden. Die beiden Temperaturfelder bewirken u.a. eine Temperaturerhöhung im Schmelzbad. Nachteilig dabei ist, dass die beiden Bauteile seitlich neben der Schweißnaht eine gewisse Breite aufweisen müssen, damit die Einrichtungen zur Erzeugung der Temperaturfelder sinnvoll eingesetzt werden können. Darüber hinaus ist die Ausbildung der Einrichtung durch zwei separate Teilelemente an den beiden Seiten des Schmelzbades relativ aufwendig.

Aus der DE 10 2004 050 819 A1 ist es bekannt, im Vor- oder Nachlaufbereich eines Bearbeitungsstrahls zum Ausbilden einer Schweißnaht einen zusätzlichen Laserstrahl zu verwenden, der quer zur Längsrichtung der Schweißnaht bewegt wird. Die Schwankungsbreite des hin- und her bewegten zusätzlichen Laserstrahls entspricht dabei in etwa der Nahtbreite.

Darüber hinaus ist aus der DE 102 61 422 A1 bekannt, einen Laserstrahl mittels einer optischen Einrichtung in zwei Teilstrahlen aufzuteilen, die beim Verschwei-βen zweier Bauteile in Vorschubrichtung aufeinander folgen und synchron bewegt werden. Wenn der nacheilende Laserstrahl im Bereich des Schmelzbades angeordnet wird, wirkt dieser stets in ein und derselben Ebene des Schmelzbades, so dass eine gezielte geometrische Beeinflussung des Schmelzbades nicht möglich ist.

Ein weiteres derartiges Verfahren ist aus der WO 03/031108 A1 bekannt. Das bekannte Verfahren dient zum Verbinden zweier metallischer Teile mittels eines Laserstrahls, wobei im Nachlaufbereich des relativ zu den Bauteilen bewegten Laserstrahls eine zweite Wärmequelle angeordnet ist. Die zweite Wärmequelle ist dabei insbesondere ebenfalls als Laserstrahlquelle ausgebildet und im Erstarrungsbereich der Schmelze derart mit diesem ausgerichtet, dass die Erstarrungsgeschwindigkeit herabgesetzt bzw. die Temperaturabnahme pro Zeiteinheit verringert wird. Dadurch lassen sich insbesondere Risse in der Schweißnaht verhindern.

Beim Verbinden von Bauteilen insbesondere mittels eines Laserstrahls ist es bekannt, dass das Verfahren insbesondere im Bereich des Tiefschweißens mit Spritzern behaftet ist. Das Prozessfenster bei den bekannten Laserstrahlverbindungsverfahren ist deshalb bei vielen Anwendungen durch das Auftreten von Nahtunregelmäßigkeiten stark eingegrenzt. Insbesondere Kupfer- und Aluminiumwerkstoffe sind mit einer Laserstrahleinrichtung nur schwer beherrschbar und zeigen sehr häufig Nahtunregelmäßigkeiten wie Auswürfe, Spritzer, Löcher in der Nahtoberraupe. Insbesondere bei Prozessen, die mit eher relativ geringen Vorschubgeschwindigkeiten und geringen Laserleistungen durchgeführt werden sollen, ist es bei insbesondere gut wärmeleitenden Werkstoffen (Kupfer, Aluminium usw.) bekannt, dass diese sehr kurze Schmelzbäder ausbilden, das heißt, dass der Nachlaufbereich sehr kurz ist. Aufgrund der langsamen Vorschübe werden die Schmelzbäder zudem sehr breit. Es hat sich dabei herausgestellt, dass bei im Verhältnis zur Schmelzbadbreite relativ kurzen Schmelzbadlängen der Schweißprozess sehr instabil verläuft, das bedeutet, dass dieser mit relativ vielen Nahtunregelmäßigkeiten behaftet ist, wie dies oben bereits erläutert wurde.

### Offenbarung der Erfindung

Ausgehend von dem dargestellten Stand der Technik liegt der Erfindung die Aufgabe zugrunde, ein Verfahren zum Verschweißen von Bauteilen mittels eines Laserstrahls nach dem Oberbegriff des Anspruchs 1 derart weiterzubilden, dass dieses auch bei relativ kleinen Laserleistungen bzw. geringen Vorschubgeschwindigkeiten hinsichtlich des Prozesses leicht beherrschbar ist bzw. qualitativ und optisch hochwertige Schweißnähe erzeugt. Diese Aufgabe wird erfindungsgemäß bei einem Verfahren zum Verschweißen von Bauteilen mittels eines Laserstrahls mit den Merkmalen des Anspruchs 1 gelöst.

Dabei findet das erfindungsgemäße Verfahren bevorzugt Verwendung bei Kupfer und Kupferlegierungen sowie Aluminium und Aluminiumlegierungen. Es hat sich dabei überraschenderweise herausgestellt, dass durch den in der Länge und im Volumen vergrößerten Nachlaufbereich der Schmelze innerhalb der Schmelze stabilere Strömungsverhältnisse mit geringeren Strömungsgeschwindigkeiten erzeugt werden, so dass es insbesondere zu keiner störenden Rückströmung in den Bereich einer von dem Laserstrahl erzeugten Kapillaren kommt.

Vorteilhafte Weiterbildungen des erfindungsgemäßen Verfahrens zum Verschweißen von Bauteilen mittels eines Laserstrahls sind im Unteranspruch 2 angegeben Erfindungsgemäß ist vorgesehen, dass der Nachlaufbereich durch Einwirkung der Wärmequelle mittelbar erwärmt wird, indem die Wärmequelle auf wenigstens eine benachbart zum Nachlaufbereich angeordnete Zone wenigstens eines der Bauteile wirkt. Mittels eines derartigen Verfahrens werden insbesondere Störeinflüsse im Nachlaufbereich, verursacht durch insbesondere eine zweite Laserstrahlquelle, die zum Erwärmen des Schmelzbades dient, vermieden.

Insbesondere ist es dabei vorgesehen, dass die Wärmequelle die Schmelze im Nachlaufbereich auf eine Temperatur erwärmt, die unterhalb der von dem Laserstrahl erzeugten Temperatur in der Fügezone liegt. In der Praxis wir die Temperatur durch eine entsprechende Regelung der Heizleistung der Wärmequelle eingestellt, wobei diese insbesondere in Abhängigkeit von den miteinander zu verschweißenden Materialen bzw. von der Größe und der Geometrie der Fügezone ermittelt wird.

Um eine besonders gleichmäßige bzw. homogene Erwärmung des Nachlaufbereichs der Schmelze zu ermöglichen, ist erfindungsgemäß vorgesehen, dass die Wärmequelle im Bereich ihrer Wirkzone zusätzlich zu einer Bewegung in Vorschubrichtung des Laserstrahls relativ zum Laserstrahl in einer Ebene senkrecht zum Laserstrahl bewegt wird. Eine derartige Bewegung kann beispielsweise bei Verwendung eines zweiten Laserstrahls als Wärmequelle in einer kreisenden bzw. rotierenden Bewegung, oder in einer sich quer oder längs der Vorschubrichtung des Laserstrahls hin- und her bewegenden Bewegung des zweiten Laserstrahls äußern.

In einem nicht-erfindungsgemäßen Beispiel ist die Wärmequelle als Strahlungseinrichtung ausgebildet. Als mögliche Strahlungseinrichtungen kommen dabei Laserstrahlquellen, Wärmequellen, die einen Lichtbogenprozess erzeugen, wie beispielsweise eine Plasmawärmequelle, eine Flamme (z.B. Acethylenflamme oder Wasserstoffflamme) und andere Wärmequellen, beispielsweise Induktionswärmequellen oder Elektronenstrahlwärmequellen, in Frage.

In einem nicht-erfindungsgemäßen Beispiel ist es dabei vorgesehen, dass die Strahlungseinrichtung einen zusätzliche Laserstrahl ausbildet, und dass der Laserstrahl und der zusätzliche Laserstrahl mittels einer gemeinsamen Laserstrahleinrichtung erzeugt werden, wobei der Laserstrahl zum Erwärmen des Nachlaufbereiches von dem Laserstrahl zum Erzeugen der Schmelze, insbesondere mittels einer Auskoppeloptik, ausgekoppelt ist. Eine derartige Vorrichtung hat einen relativ einfachen konstruktiven Aufbau, da lediglich eine (gemeinsame) Laserstrahlquelle verwendet werden muss.

In einem nicht-erfindungsgemäßen Beispiel ist es jedoch auch denkbar, dass der zusätzliche Laserstrahl mittels einer separaten, das heißt einer zusätzlichen Laserstrahleinrichtung erzeugt wird. Mittels einer derartigen Ausgestaltung ist es insbesondere möglich, für die beiden Laserstrahlquellen unterschiedliche Eigenschaften (z.B. Wellenlänge, Fokussierung, Strahlqualität und Laserleistung) bei relativ einfacher Regelbarkeit der unterschiedlichen Eigenschaften zu verwenden.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig.1: eine vereinfachte Darstellung einer Vorrichtung zum Verschweißen zweier Bauteile mittels einer Laserstrahleinrichtung in einer teilweise geschnittenen Seitenansicht,
- Fig. 2: eine Draufsicht auf den Nahtbereich, wie er mittels einer Laserstrahleinrichtung gemäß der Fig. 1 ausgebildet wird,
- Fig. 3: eine vergleichende Darstellung der Nachlaufbereiche bei einem konventionellen Laserstrahlschweißverfahren und einem Laserstrahlschweißverfahren ausgeführt mit der Vorrichtung gemäß Fig. 1 in geschnittener Seitenansicht und
- Fig. 4: eine Draufsicht auf den Verbindungsbereich zweier Bauteile bei einer gegenüber der Fig. 1 modifizierten Vorrichtung.

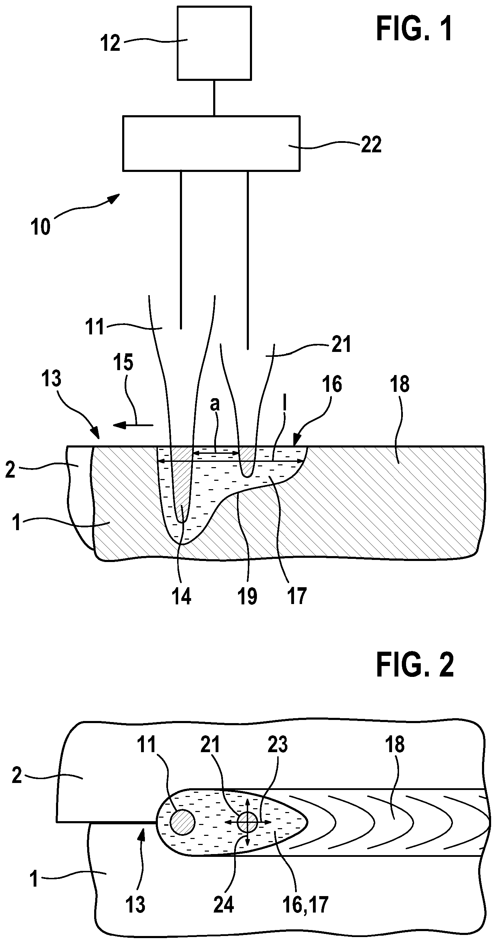

In der Fig. 1 sind stark vereinfacht die wesentlichen Bestandteile einer Vorrichtung 10 zum Verbinden zweier Bauteile 1, 2 mittels eines Laserstrahls 11 dargestellt. Die Bauteile 1 und 2 sind dabei vorzugsweise metallische Bauteile aus Aluminium oder einer Aluminiumlegierung bzw. aus Kupfer oder einer Kupferlegierung. Selbstverständlich ist das nachfolgend noch näher beschriebene Verfahren auch auf andere Materialen bzw. Werkstoffe anwendbar.

Die beiden Bauteile 1, 2 sind in der Fig. 1 senkrecht zur Zeichenebene angeordnet, so dass in der Darstellung der Fig. 1 das in der Zeichenebene hintere Bauteil 2 vom vorderen Bauteil 1 verdeckt ist. Ferner ist zwischen den beiden Bauteilen 1, 2 gegebenenfalls ein geringer Abstand senkrecht zur Zeichenebene der Fig. 1 ausgebildet.

Der Laserstrahl 11 wird mittels einer Laserstrahleinrichtung 12 erzeugt, wie diese an sich aus dem Stand der Technik bekannt ist. Dabei bildet der Laserstrahl 11 im Bereich einer Fügezone 13 der beiden Bauteile 1, 2 eine Dampfkapillare 14 aus. Der Laserstrahl 11 erwärmt die beiden Bauteile 1, 2 auf eine Temperatur, die oberhalb der Schmelztemperatur des Materials der beiden Bauteile 1, 2 liegt. Ferner wird der Laserstrahl 11 mittels nicht dargestellter Mittel in Richtung des Pfeils 15 entlang der Bauteile 1, 2 bzw. entlang der Fügezone 13 bewegt. Hierbei ist es unwesentlich, ob der Laserstrahl 11 relativ zu den beiden Bauteilen 1, 2, oder die beiden Bauteile 1, 2 relativ zum Laserstrahl 11, oder sowohl die Bauteile 1, 2, als auch der Laserstrahl 11 bewegt werden.

Beim Entlangbewegen des Laserstrahls 11 in Richtung des Pfeils 15 bildet sich ein Nachlaufbereich 16 mit flüssiger Schmelze 17 aus dem Material der beiden Bauteile 1, 2 aus, der im Abstand zum Laserstrahl 11 nach und nach zu einer Schweißnaht 18 erstarrt. Der Übergangsbereich zwischen der flüssigen Schmelze 17 und dem erstarrten Bereich der Schweißnaht 18 ist durch die Grenzlinie 19 in der Fig. 1 bezeichnet.

Erfindungsgemäß ist es vorgesehen, dass im Nachlaufbereich 16 des Laserstrahls 11 eine zusätzliche Wärmequelle angeordnet ist, die zumindest mittelbar auf die Schmelze 17 im Nachlaufbereich 16 wirkt. Diese zusätzliche Wärmequelle kann grundsätzlich beliebiger Ausgestaltung sein. Wesentlich ist lediglich, dass mittels der zusätzlichen Wärmequelle die Schmelze 17 im Nachlaufbereich 16 zusätzlich bzw. nochmals erwärmt wird, so dass sich ein in seiner Länge l sowie in seinem Volumen verlängerter bzw. vergrößerter Nachlaufbereich 16 mit flüssiger Schmelze 17 ausbildet.

In einem nicht-erfindungsgemäßen Beispiel ist es vorgesehen, dass die zusätzliche Wärmequelle in Form eines zusätzlichen Laserstrahls 21 ausgebildet ist. Der zusätzliche Laserstrahl 21 wird bei der Vorrichtung 10 durch Auskoppeln des zusätzlichen Laserstrahls 21 von der Laserstrahleinrichtung 12 mittels einer lediglich symbolisch dargestellten Auskoppeloptik 22 erzeugt.

In einem nicht-erfindungsgemäßen Beispiel wird der zusätzliche Laserstrahl 21 mittels einer separaten Laserstrahleinrichtung (nicht dargestellt) erzeugt. Wesentlich ist lediglich, dass der zusätzliche Laserstrahl 21 in einem Abstand a zum Laserstrahl 11 angeordnet ist. Hierbei wird in einer ersten Ausgestaltung der zusätzliche Laserstrahl 21 synchron mit dem Laserstrahl 11 mitbewegt, das bedeutet, dass er stets denselben Abstand a zum Laserstrahl 11 aufweist. Ferner weist die Wärmequelle bzw. der zusätzliche Laserstrahl 21 eine derartige Leistung auf, dass die Temperatur im Nachlaufbereich 16 geringer ist als die Temperatur, die unmittelbar durch den Laserstrahl 11 erzeugt wird, um diese miteinander zu verschweißen.

Wie in den Fig. 1 und 2 durch die Doppelpfeile 23, 24 angedeutet, ist es in einem nicht-erfindungsgemäßen Beispiel möglich, dass der zusätzliche Laserstrahl 21 in einer horizontalen Bauteilebene bzw. senkrecht zum zusätzlichen Laserstrahl 21 längs bzw. quer zum Laserstrahl 11 bzw. zur kontinuierlichen Bewegung des zusätzlichen Laserstrahls 21 bewegt wird. Auch ist es in einem nicht-erfindungsgemäßen Beispiel möglich, dass der zusätzliche Laserstrahl 21, in Abänderung der dargestellten Doppelpfeile 23, 24, rotierend, d.h. kreisförmig bewegt wird. Durch die zusätzliche Bewegung des Laserstrahls 21, deren Bewegungsform grundsätzlich beliebig ist, wird insbesondere der Nachlaufbereich 16 beeinflusst, insbesondere wird der Nachlaufbereich 16 dadurch homogen bzw. gleichmäßig über dessen gesamte Fläche bzw. Tiefe erwärmt.

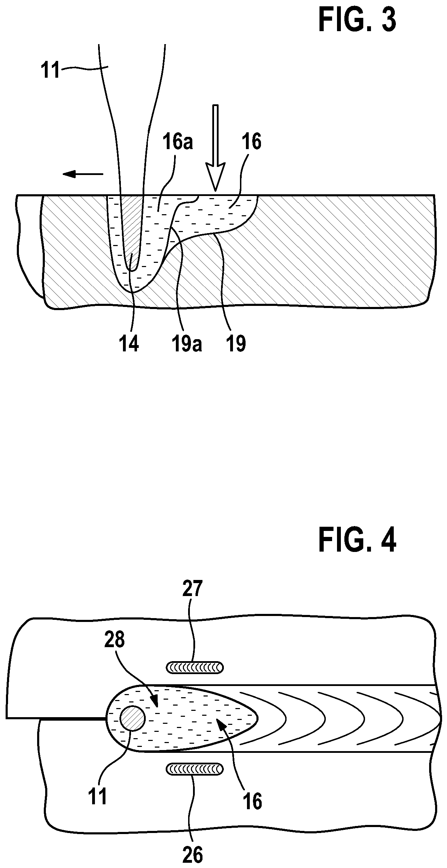

In der Fig. 3 sind anhand der Grenzlinien 19 und 19a die Nachlaufbereiche 16 und 16a beim Stand der Technik bzw. bei der Erfindung dargestellt. Man erkennt insbesondere, dass der Nachlaufbereich 16 bei der Erfindung gegenüber dem Stand der Technik mit der Grenzlinie 19a eine größere Länge aufweist als der Nachlaufbereich 16a, bzw., dass die Grenzlinie 19a in geringerem Abstand zur Dampfkapillare 14 des Laserstrahls 11 bis an die Nahtoberfläche reicht.

In der Fig. 4 ist eine Ausführungsform der Erfindung dargestellt. Hierbei erkennt man, dass seitlich benachbart zum Nachlaufbereich 16 beidseitig des Nachlaufbereichs 16 jeweils eine Zone 26, 27 ausgebildet ist, in die, insbesondere mittels eines oder mehrerer zusätzlicher Laserstrahleinrichtungen, zusätzliche Wärme in wenigstens eines der Bauteile 1, 2 eingeleitet wird. Insbesondere ist dabei erkennbar, dass die beiden Zonen 26, 27 außerhalb der Schmelze 28 im Nachlaufbereich 16 angeordnet sind. Das bedeutet, dass eine Erwärmung der Schmelze 28 bzw. des Nachlaufbereichs 16 über die beiden Zonen 26, 27 lediglich indirekt in den Nachlaufbereich 16 erfolgt.

Das mit der Vorrichtung 10 angewendete Verfahren kann in vielfältiger Weise abgewandelt bzw. modifiziert werden, ohne vom Erfindungsgedanken abzuweichen. Dieser besteht in einer Verlängerung bzw. Vergrößerung des Volumens des Nachlaufbereichs 16, so dass sich stabilere Strömungsverhältnisse zur Erzeugung qualitativ hochwertiger Schweißnähte 18 ausbilden lassen. So ist die Erfindung beispielsweise nicht darauf beschränkt, dass die Bauteile 1, 2 stumpf miteinander verbunden werden. Vielmehr können die Bauteile auch im Rahmen einer überlappenden Anordnung, einer Kehlnaht oder einer Bördelnaht miteinander verbunden werden.

## Patentansprüche

1. Verfahren zum Verschweißen von Bauteilen (1, 2) mittels eines Laserstrahls (11), bei der der Laserstrahl (11) entlang einer Fügezone (13) der Bauteile (1, 2) entlang bewegt wird, wobei das Material der insbesondere aus metallischem Werkstoff bestehenden Bauteile (1, 2) im Bereich der Fügezone (13) aufgeschmolzen wird, wobei die Schmelze (17, 28) in einem Nachlaufbereich (16) des Laserstrahls (11) in einem Abstand zum Laserstrahl (11) zu einer Schweißnaht (18) erstarrt, wobei die Schmelze (17, 28) im Nachlaufbereich (16) des Laserstrahls (11) zumindest mittelbar mittels einer Wärmequelle (21) erwärmt wird, und wobei die Wärmequelle (21) einen in seiner Länge (l) und im Volumen vergrößerten Nachlaufbereich (16) der Schmelze (17, 28) erzeugt und wobei der Nachlaufbereich (16) durch Einwirkung der Wärmequelle (21) mittelbar erwärmt wird, indem die Wärmequelle (21) auf wenigstens eine benachbart zum Nachlaufbereich (16) angeordnete Zone (26, 27) wenigstens eines Bauteils (1, 2) wirkt,
**dadurch gekennzeichnet,**
**dass** die Wärmequelle (21) im Bereich ihrer Wirkzone zusätzlich zu einer Bewegung in Vorschubrichtung des Laserstrahls (11) relativ zum Laserstrahl (11) in einer Ebene senkrecht zum Laserstrahl (11) bewegt wird.

2. Verfahren nach Anspruch 1,
**dadurch gekennzeichnet,**
**dass** die Wärmequelle (21) die Schmelze (17, 28) im Nachlaufbereich (16) auf eine Temperatur erwärmt, die unterhalb der von dem Laserstrahl (11) erzeugten Temperatur in der Fügezone (13) liegt.

## Claims

1. Method for welding components (1, 2) by means of a laser beam (11), in which the laser beam (11) is moved along a joining zone (13) of the components (1, 2), wherein the material of the components (1, 2), which consist in particular of metallic material, is melted in the region of the joining zone (13), wherein the melt (17, 28) is solidified in a trailing region (16) of the laser beam (11), at a distance from the laser beam (11), to form a weld seam (18), wherein the melt (17, 28) is heated in the trailing region (16) of the laser beam (11) at least indirectly by means of a heat source (21), and wherein the heat source (21) generates a trailing region (16) of the melt (17, 28), said trailing region being enlarged in terms of its length (l) and volume, and wherein the trailing region (16) is heated indirectly by action of the heat source (21) in that the heat source (21) acts on at least one zone (26, 27) of at least one component (1, 2), said zone being arranged adjacent to the trailing region (16),
**characterized**
**in that**, in the region of its active zone, in addition to a movement in a feed direction of the laser beam (11), the heat source (21) is moved relative to the laser beam (11) in a plane perpendicular to the laser beam (11).

2. Method according to Claim 1,
**characterized**
**in that** the heat source (21) heats the melt (17, 28) in the trailing region (16) to a temperature which lies below the temperature, generated by the laser beam (11), in the joining zone (13).

## Revendications

1. Procédé de soudage de composants (1, 2) au moyen d'un faisceau laser (11), le faisceau laser (11) étant déplacé le long d'une zone de jonction (13) des composants (1, 2), le matériau des composants (1, 2), notamment en matière métallique, étant fondu au niveau de la zone de jonction (13), la matière fondue (17, 28) se solidifiant dans une zone arrière (16) du faisceau laser (11) à distance du faisceau laser (11) afin de former un cordon de soudure (18), la matière fondue (17, 28) étant chauffée dans la zone arrière (16) du faisceau laser (11) au moins indirectement au moyen d'une source de chaleur (21), et la source de chaleur (21) générant une zone arrière (16), agrandie dans sa longueur (1) et en volume, de la matière fondue (17, 28) et la zone arrière (16) étant chauffée indirectement par l'action de la source de chaleur (21) en ce que la source de chaleur (21) agit sur au moins une zone (26, 27) d'au moins un composant (1, 2) qui est disposée de manière adjacente à la zone arrière (16),
**caractérisé en ce que**
la source de chaleur (21) est déplacée dans un plan perpendiculaire au faisceau laser (11) au niveau de sa zone d'action en plus d'un déplacement dans le sens d'avancement du faisceau laser (11) par rapport au faisceau laser (11).

2. Procédé selon la revendication 1,
**caractérisé en ce que**
la source de chaleur (21) chauffe la matière fondue (17, 28) dans la zone arrière (16) à une température inférieure à la température, générée par le faisceau laser (11), dans la zone de jonction (13).
